# EUROPÄISCHE PATENTSCHRIFT

(11) **EP 1 842 880 B1**
(45) Veröffentlichungstag und Bekanntmachung des Hinweises auf die Patenterteilung: **08.03.2017**
(21) Anmeldenummer: 06405149.3
(22) Anmeldetag: 06.04.2006
(51) Int. Cl.: C09C 1/50, F23D 14/22, F23C 7/02, F23D 14/84

(54) **VORRICHTUNG ZUM ERZEUGEN VON RUSS**
SOOT GENERATOR
GENERATEUR DE SUIE

(43) Veröffentlichungstag der Anmeldung: 10.10.2007
(73) Patentinhaber: Testo AG, 79853 Lenzkirch (DE)
(72) Erfinder: Mosimann Thomas, 5616 Meisterschwanden (CH); Kasper Markus, 8967 Widen (CH)
(74) Vertreter: Frei Patent Attorneys

(56) Entgegenhaltungen:
- EP-A- 1 055 877
- DE-A1- 2 842 977
- US-A- 4 751 069
- JING L: "GENERATION OF COMBUSTION SOOT PARTICLES FOR CALIBRATION PURPOSES" ETH WORKSHOP ON NANOPARTICLES MEASUREMENT, 7. August 1998 (1998-08-07), Seiten 1-4, XP008004395

## Beschreibung

Die Erfindung betrifft eine Vorrichtung zum Erzeugen von Russ mit reproduzierbaren Eigenschaften.

Russerzeuger, welche Russ mit reproduzierbaren Eigenschaften produzieren, werden zur Kalibrierung oder Justierung von Russpartikel-Messgeräten benötigt. Solche Russpartikel-Messgeräte werden beispielsweise zur Messung von Emissionseigenschaften von Verbrennungsmotoren, insbesondere Dieselmotoren verwendet. Ein weiteres wichtiges Anwendungsgebiet für Russerzeuger ist die Entwicklung und Prüfung verschiedenster Arten von Filtern, zu deren Charakterisierung Stäube oder Russaerosol mit bekannten, konstanten und ggf. einstellbaren Möglichkeiten bereitgestellt werden müssen. In solchen Anwendungen stellen Russerzeuger eine kostengünstige Alternative zu Motorenprüfständen dar.

Eine Möglichkeit der Russherstellung beruht auf der Verbrennung in einer Flamme. Damit die Eigenschaften des Russes wie gewünscht reproduzierbar sind, sollten keine Turbulenzen auftreten. Dies im Gegensatz zu Russerzeugern, die grosse Russmengen produzieren sollen. Turbulenzen haben bekanntermassen zur Folge, dass grössere Russmengen in mehr oder weniger stossweise erzeugt werden. Die Flamme sollte daher für den vorliegenden Zweck eine Diffusionsflamme oder vorgemischte Flamme sein, und die Strömungen im Bereich der Flamme sind mehr oder weniger laminar zu halten.

In den Schriften EP 1 055 877 und WO 2004/065494 werden solche Russerzeuger zur Herstellung von Russ mit reproduzierbaren Eigenschaften beschrieben: In einem Brennraum wird mittels einem Brenngas und einem Oxidationsgas eine Russpartikel erzeugende Diffusionsflamme gebildet. Der Brennraum mündet in eine davon separate Leitung, in welcher Löschgas geführt wird und in welcher die Russpartikel weggeführt werden. Durch den Aufbau mit einer separaten Russwegführleitung wird erreicht, dass Veränderungen der Strömungsverhältnisse in der Russwegführleitung keinen nennenswerten Einfluss auf die Eigenschaften der erzeugten Russpartikel haben. L Jing., "Generation of Combustion Soot Particles for Calibration Purpuses", ETH Workshop "Nanoparticle Measurement", 7. August 1998, zeigt einen alternativen Russerzeugers, bei welchem kein Löschgas zugeführt wird.

Die deutsche Offenlegungsschrift 28 42 977 betrifft eine Vorrichtung zum Herstellen von Russ als Farbstoff, wobei die Vorrichtung eine Reaktionskammer aufweist, welche horizontal durchströmt wird. Auch die US 4,751,069 offenbart eine Vorrichtung zum Herstellen von Russ als Farbstoff, wobei eine vertikale Flamme verwendet wird, und wobei die Reaktion durch seitlich eingelassenes Gas und durch von oben eingesprühtes Wasser gezielt unterbrochen wird. Die deutsche Offenlegungsschrift 22 55 813 betrifft einen chemischen Reaktor mit einer Düse zum Einleiten der Reaktanden und eines Abschirmgases sowie einer weiteren Düse zum Einleiten eines Reaktionsgase.

Die vorgenannten Russerzeuger zur Herstellung von Russ mit reproduzierbaren Eigenschaften haben den gemeinsamen Nachteil, dass sie relativ kompliziert im Aufbau sind. Insbesondere Vorrichtungen mit seitlich ineinander mündenden Röhren sind recht aufwändig in der Herstellung.

Die Erfindung versucht, hier Abhilfe zu schaffen.

Aufgabe der Erfindung ist daher, eine Vorrichtung und ein Verfahren zum Erzeugen von Russpartikeln mit reproduzierbaren Eigenschaften zur Verfügung zu stellen, welches Nachteile von bestehenden Vorrichtungen und Verfahren überwindet und insbesondere die Bildung von Russ mit einstellbaren Eigenschaften ermöglichen sollte. Die Vorrichtung sollte vorzugsweise in der Fertigung einfacher sein als Vorrichtungen gemäss dem genannten Stand der Technik.

Diese Aufgabe wird gelöst durch die Erfindung, wie sie in den Patentansprüchen definiert ist.

Beim erfindungsgemässen Verfahren wird der Brennkammer, in welcher eine Flamme in nicht-turbulenter Strömungsumgebung gebildet wird, in Strömungsrichtung nach der Flamme von mehreren Seiten gegen eine Mitte der Brennkammer hin ein Kühl- und Verdünnungsgas zugeführt, ohne dass eine Änderung der Strömungsrichtung des Gases aus der Flamme erfolgt. Bei der vorzugsweise gewählten Geometrie mit einer vertikal nach oben gerichteten Flamme (ählich einer Kerzenflamme) ist "nach der Flamme" gleichzusetzen mit "oberhalb der Flamme".

Relative Orts- oder Richtungsangaben wie "oberhalb", "unterhalb", "vertikal", "seitlich" etc. sind in diesem Text immer als auf den Betriebszustand bezogen zu verstehen.

Der Stand der Technik gemäss EP 1 055 877 und WO 2004/065494 lehrt das Russpartikel enthaltende Gas aus der Brennkammer in eine horizontal verlaufende Russwegführleitung zu leiten, in welche auch Löschgas eingeleitet wird. In der Flamme und damit im Brennraum strömt das Gas vertikal. Im Gegensatz dazu wird gemäss der Erfindung ein Kühl- und Verdünnungsgas direkt der Brennkammer zugeführt, d.h. zwischen der Flamme und der Kühl- und Verdünnungsgaszuführung befindet sich keine Mündung einer Kammer in ein andere Kammer oder Leitung. Im Falle eines Aufbaus aus Teilen, die um eine Achse rotationssymmetrisch sind, (das ist für die Fertigung vorteilhaft) gibt es keine gegeneinander verkippten Achsen, und es gibt auch keine Änderung der Strömungsrichtung zwischen der Brennkammer und einer Russwegführleitung, wie das im Stand der Technik gelehrt wird. Es ist ein praktisch zylindersymmetrischer Aufbau aus einem geraden Rohr möglich, das die Brennkammer bildet. Das vereinfacht auch die Strömungsverhältnisse und begünstigt die Reproduzierbarkeit. Vorzugsweise ist zwischen der Flamme und der Kühl- und Verdünnungsgaszuführung nicht einmal eine Verengung oder Aufweitung der Kammer notwendig.

Ein weiterer Vorteil des erfindungesgemässen Vorgehens gegenüber dem Stand der Technik ist, dass als Kühl- und Verdünnungsgas kein Löschgas (d.h. kein bei den herrschenden Temperaturen chemisch inertes Gas wie Stickstoff oder ein Edelgas) verwendet werden muss, sondern bspw. auch Luft verwendet werden kann.

Die Flamme verläuft in nicht-turbulenter Strömung. Dadurch ist das Verfahren besonders gut dafür geeignet, Russ für Mess- Kalibrierungs- und Testzwecke herzustellen. Es hat sich nämlich gezeigt, dass in einer turbulenten Umgebung die Koagulation beschleunigt wird, was zu im Durchschnitt grösseren Russpartikeln führt. Da zu kalibrierende/testende Messgeräte und Filter auf die gesundheitsschädlichen kleineren Partikel empfindlich bzw. für diese wirksam sein sollen, ist ein Aerosol mit grossen Russpartikeln jedoch für Kalibrierungs- und Testzwecke ungeeignet.

Eine erfindungsgemässe Vorrichtung ist ein Russerzeuger für Mess-, Kalibrierungs-Prüf- oder Filtertestzwecke mit einer Brennkammer und einer Mehrzahl von in die Brennkammer mündenden Düsen oder Offnungen zum Zuführen von Kühl- und Verdünnungsgas, derart, dass das Zuführen des Kühl- und Verdünnungsgases von mehreren Seiten gegen eine Mitte der Brennkammer hin und ohne Änderung der Strömungsrichtung des vertikal strömenden Gases aus der Flamme erfolgt.

Der erfindungsgemässe Aufbau ist deutlich einfacher und daher kostengünstiger in der Herstellung als ein Russerzeuger gemäss dem Stand der Technik. Auch ist sein Design flexibler, kann doch als Brennkammer ein im wesentlichen röhrenförmiger Körper verwendet werden. Dies erlaubt auch, auf einfache Weise zwischen verschiedenen Exemplaren des erfindungsgemässen Russerzeugers Parameter wie den vertikalen Abstand zwischen der Zuführung des Brenn- und Oxidationsgases und der Mündung des Kühl- und Verdünnungsgases zu variieren. Der genannte vertikale Abstand bestimmt im Wesentlichen den Bereich, in welchem Russteilchen gebildet werden und in dem sie mit der Umgebung reagieren/koagulieren können. Gemäss einer speziellen Ausführungsform ist dieser vertikale Abstand sogar einstellbar, indem die Zuführung des Brenn- und Oxidationsgases und/oder die Mündung des Kühl- und Verdünnungsgases gegenüber der Brennkammer vertikal (d.h. in entlang einer Strömungsachse) verschiebbar ist.

Besonders bevorzugt ist die Zuführung von Kühl- und Verdünnungsgas von mehreren Seiten gegen eine Mitte der Brennkammer hin. Beispielsweise besitzt die Brennkammer mindestens drei, vorzugsweise mindestens vier, mindestens fünf, mindestens sechs oder mehr Öffnungen oder Düsen, die bspw. ringförmig um die Mitte hin angeordnet sind und durch welche das Kühl- und Verdünnungsgas zur Mitte hin strömt.

Herstellungstechnisch besonders günstig ist eine Ausführungsform, in welcher die Brennkammer als gerades Rohr ausgebildet ist und bei welcher die Zuführung des Kühl- und Verdünnungsgases durch mehrere ringförmig um die Mantelfläche herum angeordnete Öffnungen (Löcher) zugeführt wird.

Im Folgenden werden Ausführungsbeispiele der Erfindung anhand von Zeichnungen im Detail beschrieben. In den Zeichnungen zeigen:
- Figur 1 ein Schema einer erfindungsgemässen Vorrichtung zur Ausführung des erfindungsgemässen Verfahrens,
- Figur 2 ein Schema einer weiteren erfindungsgemässen Vorrichtung zur Ausführung des erfindungsgemässen Verfahrens.

In den Figuren bezeichnen gleichen Bezugszeichen einander entsprechende Elemente der beiden Ausführungsformen.

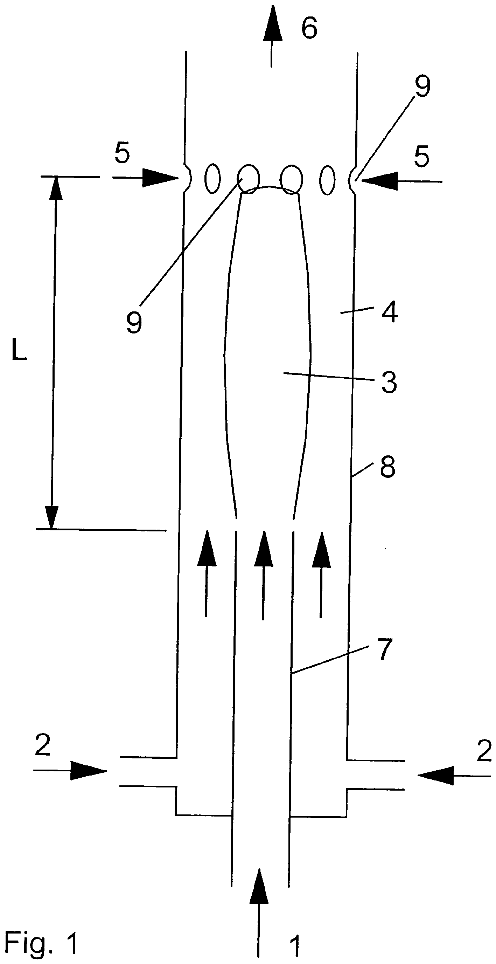

Der Russerzeuger gemäss Figur 1 weist ein Brennkammer-Rohr 8 auf, durch welches die Wandung einer Brennkammer 4 gebildet wird. Ins Innere der Brennkammer führt ein Brenngasrohr 7, durch welches der Brennkammer ein Brenngas 1 zuführbar ist. Durch weitere Zuführungsöffnungen in einen unteren Bereich der Brennkammer 4 ist ein Oxydationsgas 2 zuführbar. Bei gleichzeitiger Zuführung von Brenn- und Oxydationsgas und nach vorgängiger Zündung kann in der Brennkammer 4 eine Diffusionsflamme 3 aufrecht erhalten werden.

In der gezeichneten Anordnung ragt das Brenngasrohr 7 in die Brennkammer hinein, während das Oxydationsgas in Strömungsrichtung weiter unten zugeführt wird. In dieser Anordnung bildet sich die Diffusionsflamme 3 wie gezeichnet von der Mündung des Brenngasrohrs 7 nach oben hin aus. In Strömungsrichtung oberhalb der Mündung des Brenngasrohrs 7 wird der Brennkammer ein Kühl- und Verdünnungsgas zugeführt 5. Dies erfolgt durch Öffnungen 9 in der Wandung der Brennkammer hindurch. Diese Öffnungen 9 sind in einer ringförmigen Anordnung entlang einer Umfangslinie der Wandung verteilt angeordnet. Dadurch strömt Kühl- und Verdünnungsgas von einander gegenüberliegenden (oder ungefähr gegenüberliegenden) Öffnungen aus entgegengesetzten horziontalen Richtungen in den Brennraum 4, so dass der resultierende Beitrag zur Strömung durch die Zuführung des Kühl- und Verdünnungsgases in horizontaler Richtung näherungsweise verschwindet. In der Summe bildet sich auch in Strömungsrichtung oberhalb der Zuführung des Kühl- und Verdünnungsgases eine im Wesentlichen vertikale Gasströmung aus.

Die Volumenströme des Brenn- und Oxidationsgases und ggf. von beigemischten weiteren Gasen werden so gehalten, dass sich im Bereich der Flamme 3 eine laminare Strömung ergibt.

Der Volumenstrom des Kühl- und Verdünnungsgases ist so hoch gewählt, dass dadurch die Flamme so stark abgekühlt wird, dass diese gelöscht und die Oxydation der Russpartikel verhindert wird. Der Volumenstrom kann abhängig von der chemischen Zusammensetzung des Kühl- und Verdünnungsgases gewählt werden. Wenn - was besonders einfach ist - als Kühl- und Verdünnungsgas Luft gewählt wird, erfolgt das Stoppen/Verhindern des Oxydationsprozess primär durch die Kühlwirkung. Bei der Verwendung von inertem Löschgas wirkt auch die starke Verdünnung des Sauerstoffgehalts durch das Löschgas dem Oxydationsprozess entgegen.

Das russhaltige Aerosol 6 strömt nach oben aus der Brennkammer 4, wo es durch geeignete Transport- und/oder Fördermittel (nicht gezeichnet), bspw. durch weitere Transportrohre oder -schläuche bestimmungsgemäss weiter transportiert werden kann.

Die Flammenhöhe wird durch den vertikalen Abstand L zwischen der Brenngasrohr-Mündung und den Öffnungen 9 bestimmt. Das Brenngasrohr 7 kann bspw. relativ zum Brennkammer-Rohr 8 verschiebbar und folglich die Flammenhöhe L variierbar sein. Dadurch lassen sich die Russpartikel-Grösse und die Russpartikel-Konzentration sowie der Ruspartikel-Massenausstoss gezielt beeinflussen. Weitere Beeinflussungsmöglichkeiten ergeben sich dadurch, dass dem Brenngas 1 und/oder dem Oxydationsgas 2 andere Gase wie Stickstoff oder Luft beigemischt werden können.

In der gezeichneten Anordnung wird das Brenngas durch ein separates Brennrohr 7 mit einer Mündung im Brennraum zugeführt, währenddem das Oxydationsgas von unten her aussen am Brennrohr 7 entlangströmt. Auch die umgekehrte Konfiguration ist denkbar, d.h. das Oxydationsgas strömt durch ein separates Rohr, während das Brenngas diesem aussen entlang strömt. Es ist auch möglich, dass sowohl das Brennals auch das Oxydationsgas gezielt an die Basis der Flamme 3 herangeführt werden, bspw. indem sie durch zwei zueinander konzentrische oder parallele und nebeneinander mündende Röhren strömen.

Auch eine Anordnung mit einem vorgemischtem Brenn- und Oxydationsgas ist denkbar.

Die Brennkammer 4 kann durch eine (nicht gezeichnete) äussere Kammer umgeben oder teilweise umgeben sein. Diese äussere Kammer umfasst dann die Brennkammer mindestens im Bereich der Öffnungen. Die äussere Kammer enthält das Kühl- und Verdünnungsgas mit einem höheren Druck als er in der Brennkammer herrscht. Die äussere Kammer kann durch ein äusseres Rohr gebildet sein, welches das Brennkammer-Rohr mindestens bereichsweise umfasst. Sie kann bspw. auch als ringförmige Manschette vorliegen, die auf der Höhe der Öffnungen 9 um das Brennkammer-Rohr gelegt ist. Viele weitere Lösungen sind denkbar.

Es gibt Anwendungen, bei denen das Aerosol 6 auch mit einem unter dem Athmosphärendruck liegenden Druck zur Verfügung gestellt werden kann. Ein Beispiel dafür ist die in der Schrift WO 2006/005 212 der Matter Engineering gezeigte Anordnung. Für solche Anwendungen ist eine äussere Kammer nicht notwendig. Vielmehr kann durch entsprechende Pumpmittel sichergestellt sein, dass in der Brennkammer 4 immer ein Unterdruck herrscht. Dann kann als Kühl- und Verdünnungsgas die Umgebungsluft dienen, die dann automatisch durch die Öffnungen 9 angesaugt wird.

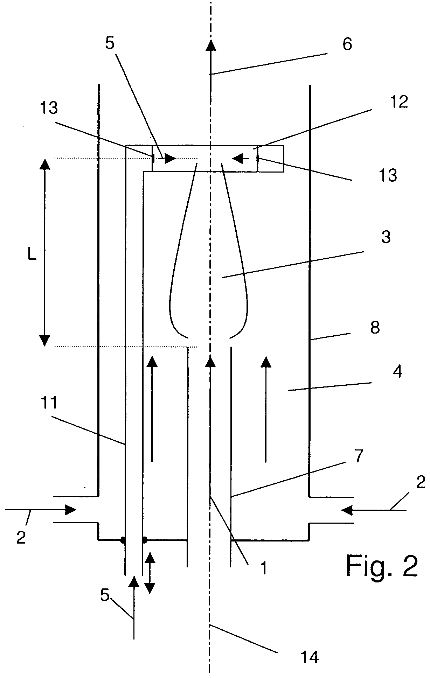

In **Figur 2** ist eine weitere Ausführungsform eines erfindungsgemässen Russerzeugers gezeichnet. Es werden hier nur diejenigen Elemente beschrieben, deren Funktion sich von denen der Ausführungsform gemäss Figur 1 unterscheiden. Im Unterschied zu letzterer wird das Kühl- und Verdünnungsgas nicht durch Öffnungen in der Wandung des Brennraums 4 zugeführt, sondern durch Düsen 13 welche innenseitig an einem Kühlgasring 12 angeordnet sind. Der Kühlgasring ist bspw. mit der Brennkammer 4 konzentrisch (Achse 14 der Brennkammer und des Kühlgasrings). Es können zwei oder mehrere Düsen 13 vorhanden und bspw. entlang der Innenseite des Kühlgasring gleichmässig verteilt sein. Die Zuführung in den Kühlgasring erfolgt durch ein Kühlgasrohr 11. Der Kühlgasring ist, wie durch einen Doppelpfeil angedeutet, bspw. relativ zum Brennraum axial verschiebbar, wodurch die Höhe L der Flamme 3 beeinflusst werden kann. Natürlich kann alternativ oder ergänzend dazu auch das Brenngasrohr 7 gegenüber dem Brennraum 4 verschiebbar sein.

Viele weitere Ausführungsformen sind denkbar.

## Patentansprüche

1. Verfahren zum Erzeugen von Russ mit definierten Eigenschaften für Mess-Kalibrierungs-, Prüf- oder Filtertestzwecke, aufweisend die Verfahrensschritte
• Zuführen von Brenn- und Oxidationsgas (1, 2) in eine Brennkammer (4),
• zur-Reaktion-Bringen des Brenn- und Oxidationsgases in der Brennkammer (4), so dass eine vertikale Flamme (3) entsteht, und
• Einstellen von Strömungsverhältnissen in der Brennkammer (4) so, dass eine Gasströmung in der Flamme (3) nicht-turbulent verläuft,
**dadurch gekennzeichnet, dass**
• der Brennkammer (4) in Strömungsrichtung nach der Flamme ein Kühl- und Verdünnungsgas (5) zugeführt wird,
• wobei das Zuführen des Kühl- und Verdünnungsgases von mehreren Seiten gegen eine Mitte der Brennkammer (4) hin und ohne Änderung der Strömungsrichtung des vertikal strömenden Gases aus der Flamme erfolgt.

2. Verfahren nach Anspruch 1, **dadurch gekennzeichnet, dass** das Kühl- und Verdünnungsgas der Brennkammer aus mindestens drei Düsen (13) und/oder Öffnungen (9) zugeführt wird.

3. Verfahren nach Anspruch 2, **dadurch gekennzeichnet, dass** die Düsen (13) und/oder Öffnungen (9) ringförmig um die Mitte angeordnet sind.

4. Verfahren nach einem der Ansprüche 1 bis 3, **dadurch gekennzeichnet, dass** das Kühl- und Verdünnungsgas durch Öffnungen (9) in einer Wandung (8) der Brennkammer (4) zugeführt wird.

5. Verfahren nach einem der vorangehenden Ansprüche, **dadurch gekennzeichnet, dass** als Kühl- und Verdünnungsgas (5) Luft, vorzugsweise auf Raumtemperatur gewählt wird.

6. Vorrichtung zum Erzeugen von Russ mit definierten Eigenschaften für Mess-, Kalibrierungs- Prüf- oder Filtertestzwecke, aufweisend eine Brennkammer (4) in der eine vertikale Flamme (3) gebildet wird, eine Zuführung für Brenn- und Oxidationsgas (1, 2) zur Bildung der Flamme (3) in die Brennkammer, wobei Strömungsverhältnisse in der Brennkammer in einem Betriebszustand der Vorrichtung so einstellbar sind, dass eine Gasströmung in der Flamme nicht-turbulent verläuft, **gekennzeichnet durch** eine Mehrzahl von Öffnungen (9) und/oder Düsen (13) zum Zuführen eines Kühl- und Verdünnungsgases (5) in die Brennkammer oberhalb der Flamme (3), derart, dass das Zuführen des Kühl- und Verdünnungsgases von mehreren Seiten gegen eine Mitte der Brennkammer (4) hin und ohne Änderung der Strömungsrichtung des vertikal strömenden Gases aus der Flamme erfolgt..

7. Vorrichtung nach Anspruch 6, **dadurch gekennzeichnet, dass** mindestens drei Öffnungen und/oder Düsen vorhanden sind und dass diese Öffnungen (9) und/oder Düsen (13) nach der Flamme (3) ringförmig um eine Mitte angeordnet sind und im Betriebszustand das Kühl- und Verdünnungsgas (5) gegen die Mitte hin verströmen.

8. Vorrichtung nach einem der Ansprüche 6 oder 7, **dadurch gekennzeichnet, dass** die mindestens eine Öffnung (9) und/oder Düse als Loch in einer Wandung (8) der Brennkammer (4) ausgebildet ist und dass im Betriebszustand durch dieses Loch ein Umgebungsgas in die Brennkammer einströmt und dabei als das Kühl- und Verdünnungsgas (5) wirkt.

9. Vorrichtung nach Anspruch 8, **gekennzeichnet durch** eine äussere Kammer, welche die Brennkammer mindestens im Bereich des Lochs (9) in der Wandung umgibt und welche das Umgebungsgas fasst.

10. Vorrichtung nach einem der Ansprüche 6 bis 9, **dadurch gekennzeichnet, dass** ein Abstand (L) zwischen der Zuführung für Brenn- und Oxydationsgas und der mindestens einen Öffnung und/oder Düse einstellbar ist.

## Claims

1. A method for producing soot with defined characteristics, for measurement purposes, calibration purposes, examination purposes or filter testing purposes, comprising the method steps
• feeding fuel gas and oxidation gas (1, 2) into a combustion chamber (4),
• bringing the fuel gas and oxidation gas to react in the combustion chamber (4), so that a vertical flame (3) arises, and
• setting flow conditions in the combustion chamber (4) so that a gas flow in the flame (3) runs in a non-turbulent manner,
**characterised in that**
• a cooling and diluting gas (5) is fed to the combustion chamber (4) after the flame in the flow direction,
• wherein the feeding of the cooling and diluting gas is effected from several sides towards a middle of the combustion chamber (4) and without a change of the flow direction of the gas flowing vertically out of the flame.

2. A method according to claim 1, **characterised in that** the cooling and diluting gas is fed to the combustion chamber out of at least three nozzles (13) and/or openings (9).

3. A method according to claim 2, **characterised in that** the nozzles (13) and/or openings (9) are arranged annularly around the middle.

4. A method according to one of the claims 1 to 3, **characterised in that** the cooling and diluting gas is fed to the combustion chamber (4) through openings (9) in a wall (8).

5. A method according to one of the preceding claims, **characterised in that** air, preferably at room temperature, is selected as a cooling and diluting gas (5).

6. A device for producing soot with defined characteristics, for measurement purposes, calibration purposes, examination purposes or filter testing purposes, comprising a combustion chamber (4), in which a vertical flame (3) is formed, a feed for fuel gas and oxidation gas (1, 2) into the combustion chamber for forming the flame (3), wherein flow conditions in the combustion chamber, in an operating condition of the device can be set such that a gas flow in the flame runs in a non-turbulent manner, **characterised by** a plurality of openings (9) and/or nozzles (13) for feeding a cooling and diluting gas (5) into the combustion chamber above the flame (3), in a manner such that the feed of the cooling and diluting gas is effected from several sides towards a middle of the combustion chamber (4), and without a change of the flow direction of the gas flowing vertically out of the flame.

7. A device according to claim 6, **characterised in that** at least three openings and/or nozzles are present and that these openings (9) and/or nozzles (13) are arranged annularly around a middle, after the flame (3), and emit the cooling and diluting gas (5) towards the middle in the operating condition.

8. A device according to one of the claims 6 or 7, **characterised in that** the at least one opening (9) and/or nozzle is designed as a hole in a wall (8) of the combustion chamber (4), and that in the operating condition, an ambient gas flows through this hole into the combustion chamber and thereby acts as a cooling and diluting gas (5).

9. A device according to claim 8, **characterised by** an outer chamber which surrounds the combustion chamber at least in the region of the hole (9) in the wall and which contains the ambient gas.

10. A device according to one of the claims 6 to 9, **characterised in that** a distance (L) between the feed for the fuel gas and oxidation gas and the at least one opening and/or nozzle can be adjusted.

## Revendications

1. Procédé de formation de suie présentant des propriétés définies dans un but de mesure, d'étalonnage, de vérification ou de test de filtre, le procédé présentant les étapes suivantes :
amener d'un gaz combustible et un gaz oxydant (1, 2) dans une chambre de combustion (4),
faire réagir le gaz combustible et le gaz oxydant dans la chambre de combustion (4) de manière à obtenir une flamme verticale (3) et
ajuster des conditions d'écoulement dans la chambre de combustion (4) de telle sorte qu'un écoulement de gaz dans la flamme (3) ne soit pas turbulent,
**caractérisé en ce que**
un gaz de refroidissement et de dilution (5) est amené à la chambre de combustion (4) à la suite de la flamme dans la direction d'écoulement,
**en ce que** l'amenée du gaz de refroidissement et de dilution s'effectue de plusieurs côtés en direction d'un milieu de la chambre de combustion (4) et sans modification de la direction d'écoulement du gaz s'écoulant verticalement hors de la flamme.

2. Procédé selon la revendication 1, **caractérisé en ce que** le gaz de refroidissement et de dilution est amené à la chambre de combustion par au moins trois tuyères (13) et/ou ouvertures (9).

3. Procédé selon la revendication 2, **caractérisé en ce que** les tuyères (13) et/ou les ouvertures (9) sont disposées en anneau autour du milieu.

4. Procédé selon l'une des revendications 1 à 3, **caractérisé en ce que** le gaz de refroidissement et de dilution est amené par des ouvertures (9) ménagées dans une paroi (8) de la chambre de combustion (4).

5. Procédé selon l'une des revendications précédentes, **caractérisé en ce que** de l'air et de préférence de l'air à température ambiante est sélectionné comme gaz de refroidissement et de dilution (5).

6. Dispositif de formation de suie présentant des propriétés définies dans un but de mesure, d'étalonnage, de vérification ou de test de filtre, le dispositif présentant une chambre de combustion (4) dans laquelle est formée une flamme verticale (3), une amenée de gaz combustible et de gaz oxydant (1, 2) en vue de former la flamme (3) dans la chambre de combustion, des conditions d'écoulement dans la chambre de combustion pouvant être réglées dans un état de fonctionnement du dispositif de telle sorte que l'on obtienne un écoulement de gaz non turbulents dans la flamme,
**caractérisé par**
plusieurs ouvertures (9) et/ou tuyères (13) prévues pour amener un gaz de refroidissement et de dilution (5) dans la chambre de combustion au-dessus de la flamme (3) de telle sorte que l'amenée du gaz de refroidissement et de dilution s'effectue depuis plusieurs côtés vers un milieu de la chambre de combustion (4) et sans modification de la direction d'écoulement du gaz s'écoulant verticalement hors de la flamme.

7. Dispositif selon la revendication 6, **caractérisé en ce qu'**au moins trois ouvertures et/ou tuyères sont prévues et **en ce que** ces ouvertures (9) et/ou tuyères (13) sont disposées en anneau après la flamme (3) autour du milieu et écoulent le gaz de refroidissement et de dilution (5) vers le milieu dans l'état de fonctionnement.

8. Dispositif selon les revendications 6 ou 7, **caractérisé en ce que** la ou les ouvertures (9) ou tuyères sont configurées comme trous ménagés dans une paroi (8) de la chambre de combustion (4) et **en ce que** dans l'état de fonctionnement, un gaz ambiant pénètre par ce trou dans la chambre de combustion pour ainsi agir comme gaz de refroidissement et de dilution (5).

9. Dispositif selon la revendication 8, **caractérisé en ce qu'**il présente une chambre externe qui entoure la chambre de combustion au moins au niveau du trou (9) ménagé dans la paroi et qui contient le gaz ambiant.

10. Dispositif selon l'une des revendications 6 à 9, **caractérisé en ce que** la distance (L) entre l'amenée de gaz combustible et de gaz oxydant et la ou les ouvertures et/ou tuyères est réglable.
